Europäisches Patentamt

European Patent Office

Office européen des brevets

(11) Veröffentlichungsnummer: **0 307 512 B1**

# EUROPÄISCHE PATENTSCHRIFT

(45) Veröffentlichungstag der Patentschrift: **22.07.92**

(51) Int. Cl.⁵: **H04N 7/00**

(21) Anmeldenummer: **87117884.4**

(22) Anmeldetag: **03.12.87**

(54) **Digitale Daten-Slicer-Schaltung für Teletextsignale.**

(30) Priorität: **08.09.87 EP 87113085**

(43) Veröffentlichungstag der Anmeldung:
**22.03.89 Patentblatt 89/12**

(45) Bekanntmachung des Hinweises auf die
Patenterteilung:
**22.07.92 Patentblatt 92/30**

(84) Benannte Vertragsstaaten:
**DE FR NL**

(56) Entgegenhaltungen:
**EP-A- 0 016 503**
**EP-A- 0 144 457**
**GB-A- 2 164 812**

(73) Patentinhaber: **Deutsche ITT Industries GmbH**
**Hans-Bunte-Strasse 19 Postfach 840**
**W-7800 Freiburg i.Br.(DE)**

(72) Erfinder: **Schweer, Rainer, Dr. Ing.**
**Lärchenweg 14**
**W-7808 Waldkirch(DE)**
Erfinder: **Jünke, Manfred, Dipl.-Ing.**
**Blumenstrasse 6**
**W-7803 Gundelfingen(DE)**
Erfinder: **Sieben, Ulrich K. Dr. Dipl.-Phys.**
**Kronengasse 7**
**W-7801 Reute(DE)**

**Beschreibung**

Die Erfindung betrifft eine digitale Daten-Slicer-Schaltung zur Abtrennung und Wiedergewinnung von digitalen Teletextsignalen aus dem in Farbfernsehempfängern demodulierten und, basierend auf einem Taktsignal, digitalisierten FBAS-Signal mit den weiteren Merkmalen des Oberbegriffs des Anspruchs 1. Eine derartige Daten-Slicer-Schaltung ist in der Offenlegungsschrift EP-A-0 144 457 entsprechend der US-Patentschrift US-A-4 656 513 (= ITT-case U. Langenkamp 3) beschrieben. Nach deren Grundgedanken wird der Slicing-Level dadurch bestimmt, daß vom startwert-behafteten FBAS-Signal das Teletextsignal subtrahiert wird. Da jedoch dessen genaue Signalform unbekannt oder nicht reproduzierbar ist, wird ein entsprechendes Referenzsignal erzeugt und subtrahiert, so daß ein Fehlersignal entsteht. Nach dessen Integration liegt der noch hochfrequente Störsignale enthaltende ungeglättete Slicing-Level vor. Dabei werden bei der Erzeugung des Referenzsignals diejenigen Teletextsignalamplituden unterdrückt, die kurz vor und kurz nach einem Null-Eins-Wechsel auftreten, so daß nur die Spitzenwerte des Teletextsignals ausgewertet werden.

Hier setzt die Erfindung nun ein, da sich gezeigt hat, daß bei Teletextsignalen mit vielen aufeinanderfolgenden Null-Eins-Wechseln, also Nullstellen, die vorbeschriebene Anordnung zu nicht akzeptierbaren Fehlern im Referenzsignal führt.

Die Aufgabe der in den Ansprüchen gekennzeichneten Erfindung besteht daher darin, die vorbeschriebene Anordnung derart weiterzubilden, daß auch bei vielen aufeinanderfolgenden Nulldurchgängen des Teletextsignals ein möglichst fehlerfreies Referenzsignal erzeugt wird und somit eine möglichst optimale Nachführung des Slicing-Levels gewährleistet ist. Die Erfindung verhindert weitgehend daß, insbesondere bei nur geringen Signalamplituden, die Anordnung ihren Sollzustand verlassen kann und somit nicht mehr in einen der beiden anderen, dann stabilen Zustände übergehen kann, wodurch die Abtrennung der Teletextinformation unmöglich wäre.

Die Erfindung wird nun anhand der Figuren der Zeichnung näher erläutert.

Fig. 1 zeigt in Form eines schematisierten Blockschaltbilds ein Ausführungsbeispiel der Erfindung, und

Fig. 2 und 3 zeigen schematisierte Zeitdiagramme zur Veranschaulichung der Wirkungsweise der Erfindung.

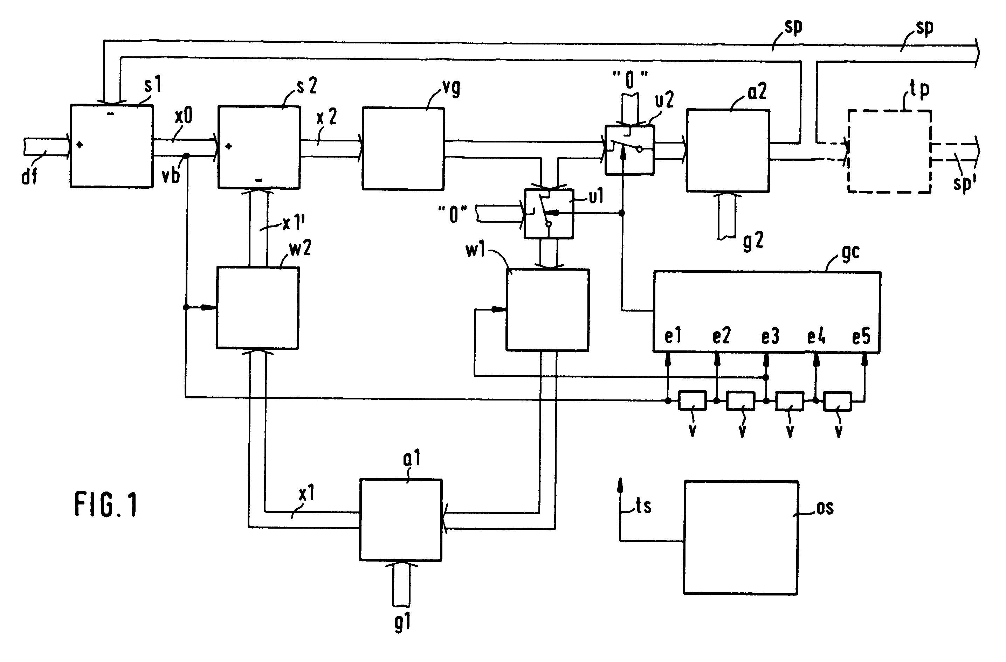

Im stark schematisierten Blockschaltbild der Fig. 1 sind durch die quadratischen und rechteckigen Schaltungssymbole digitale Schaltungsstufen symbolisiert, in denen Digitalsignale parallel verarbeitet werden, wobei im Bedarfsfall auch von der sogenannten Pipeline-Technik Gebrauch gemacht werden kann, wie dies insbesondere bei Addierern, Subtrahierern, Multiplizierern etc. von Vorteil ist.

Die erwähnte Parallelverarbeitung von mehrstelligen Digitalwörtern ist in Fig. 1 ferner dadurch symbolisiert, daß die Verbindungsleitungen zwischen den einzelnen Teilschaltungen als bandförmige Leitungen dort angegeben sind, wo diese mehrstelligen Digitalwörter auftreten, während mittels der in Schaltbildern sonst üblichen (einfachen) Linien Leitungen dargestellt sind, auf denen z.B. (nur) ein einstelliges Digitalwort weitergeleitet wird.

Als Eingangssignal der Anordnung nach Fig. 1 ist das startwertbehaftete FBAS-Signal df vorausgesetzt, wie es in den eingangs genannten Druckschriften angegeben ist. Mit FBAS-Signal ist dabei das übliche Farb-Bild-Austast-Synchron-Signalgemisch eines Fernsehempfängers bezeichnet. Im vorliegenden Fall handelt es sich dabei bereits um ein entsprechend digitalisiertes Signal, das durch Abtastung mittels des Taktsignals ts, das aus dem Taktoszillator os stammt und von einem nichtgezeigten Analog-Digital-Wandler in bekannter Weise in Digitalworte umgesetzt ist. Die Teilschaltungen der Anordnung nach Fig. 1 sind wenn nötig ebenfalls am Taktsignal ts betrieben; dies gilt insbesondere für die noch zu beschreibenden Verzögerer und Verzögerungsglieder.

Als Taktoszillator os kann jede geeignete Oszillatorschaltung einschließlich der zur Ansteuerung der einzelnen Teilschaltungen erforderlichen Treiber-und ggf. Impulsformerstufen dienen. Die letzteren sind beispielsweise von Vorteil, wenn die erfindungsgemäße Anordnung in der Technik integrierter Isolierschicht-Feldeffekt-Transistorschaltungen, also in der sogenannten MOS-Technik, realisiert werden soll und dafür die sogenannte Zweiphasen-Technik benutzt wird. Dies ist eine Schaltungstechnik, bei der die gesamte Schaltung mittels eines Taktsignals und dessen daraus abgeleitetem inversen Taktsignal, die rechteckförmig sind, betrieben wird.

Das auf dem Taktsignal ts basierende startwert-behaftete FBAS-Signal df ist dem Minuend-Eingang des ersten Subtrahierers s1 zugeführt, dessen Ausgang mit dem Minuend-Eingang des zweiten Subtrahierers s2 verbunden ist und das Digitalsignal x0 führt. Der Ausgang des zweiten Subtrahierers s2 führt das Ausgangssignal x2 und liegt über das Verzögerungsglied vg am ersten Eingang des ersten Umschalters u1 und am ersten Eingang des zweiten Umschalters u2. Die Verzögerungszeit des Verzögerungsglieds vg ist gleich der doppelten Periodendauer des Taktsignals ts. Der Ausgang des ersten Umschalters u1 liegt am Eingang des ersten Vorzeichen-Invertierers w1, dessen Ausgang mit dem Eingang des ersten gewichtenden Akkumulators a1 verbunden ist, dem der Gewichtsfaktor g1 zugeführt ist. Sein Ausgang ist mit dem Eingang des zweiten Vorzeichen-Invertierers w2 verbunden, dessen Ausgang das Signal x1 führt und mit dem Subtrahend-Eingang des zweiten Subtrahierers s2 verbunden ist.

Der Ausgang des zweiten Umschalters u2 liegt am Eingang des zweiten gewichtenden Akkumulators a2 mit dem Gewichtsfaktor g2 und sein Ausgang am Subtrahend-Eingang des ersten Subtrahierers s1. Dieser Ausgang führt das Signal sp, das der, zwar noch ungeglättete, Slicing-Level ist, der mittels des Tiefpaßfilters tp, z.B. erster Ordnung, im Bedarfsfall geglättet werden kann, so daß dessen Ausgang den geglätteten Slicing-Level sp führt.

Dem jeweiligen zweiten Eingang der beiden Umschalter u1, u2 ist das der Null entsprechende Digitalwort "0" zugeführt, so daß jeder der beiden Umschalter entweder das Ausgangssignal des Verzögerungsglieds vg oder das "0"-Digitalwort zum ersten Vorzeichen-Invertierer w1 bzw. zweiten Akkumulator a2 durchschaltet.

Dieses Durchschalten erfolgt mittels des Ausgangsignals der Logikschaltung gc, wie dies durch deren zur Schaltzunge der beiden Umschalter u1, u2 führenden Leitung veranschaulicht ist; die Schaltzunge ist in derjenigen Stellung gezeichnet, in der das Ausgangssignal des Verzögerungsglieds vg in der beschriebenen Weise durchgeschaltet wird.

Die Logikschaltung gc hat fünf Eingänge e1, e2, e3, e4, e5, zwischen die je einer der Verzögerer v geschaltet ist, deren Verzögerungszeit jeweils gleich der Periodendauer des Taktsignals ts ist; es sind somit vier Verzögerer v vorgesehen, da zwischen den Eingängen e1, e5 kein Verzögerer liegt, was auch unsinnig wäre. Der erste Eingang e1 der Logikschaltung gc ist zusammen mit dem Steuereingang des zweiten Vorzeichen-Invertierers w2 von der Vorzeichenstelle vb des Ausgangssignals des ersten Subtrahierers s1 angesteuert, während der Steuereingang des ersten Vorzeichen-Invertierers w1 vom Signal am dritten Einganng e3 der Logikschaltung gc angesteuert ist, und zwar derart, daß das ein negatives Wort angebende Signal dieser Vorzeichenstelle vb die beiden Vorzeichen-Invertierer w1, w2 in den invertierenden Zustand bringt, d.h. also, daß aus einem an ihrem jeweiligen Eingang liegenden z.B. positiven Digitalwort an deren Ausgang das entsprechende negative Digitalwort und umgekehrt erscheint. Je nach der verwendeten Art zur Darstellung positiver und negativer Zahlen handelt es sich dabei z.B. um übliche Einerkomplement- oder Zweierkomplementwandler. Die Umschaltung des ersten Vorzeichen-Invertierers w1 erfolgt um 2 Taktperioden des Taktsignals bezüglich des Signals x0 verzögert, also genau zu dem Zeitpunkt, zu dem dasjenige Digitalwort x0, dessen Vorzeichen an den Eingang e1 gelangt, am Ausgang des Verzögerers vg erscheint.

Die Logikschaltung gc gibt an ihrem Ausgang einen den jeweiligen ersten Eingang zum Ausgang des jeweiligen Umschalters u1, u2 durchschaltenden Binärpegel ab, wenn an ihren fünf Eingängen e1...e5 die Signale der folgenden Tabelle auftreten, wobei mit 0 bzw. 1 die beiden Binärpegel bezeichnet sind und x angibt, daß der eine oder der andere Binärpegel auftreten darf:

| e1 | e2 | e3 | e4 | e5 |
|----|----|----|----|----|
| x  | 0  | x  | 0  | x  |
| x  | 1  | x  | 1  | x  |
| 0  | 1  | 1  | 0  | x  |
| 1  | 0  | 0  | 1  | x  |
| x  | 0  | 1  | 1  | 0  |
| x  | 1  | 0  | 0  | 1  |

Der konkrete Aufbau der Logikschaltung kann vom Fachmann aus den Tabellenangaben in üblicher Art und Weise unter Berücksichtigung der bekannten Minimierungsgesetze erstellt werden.

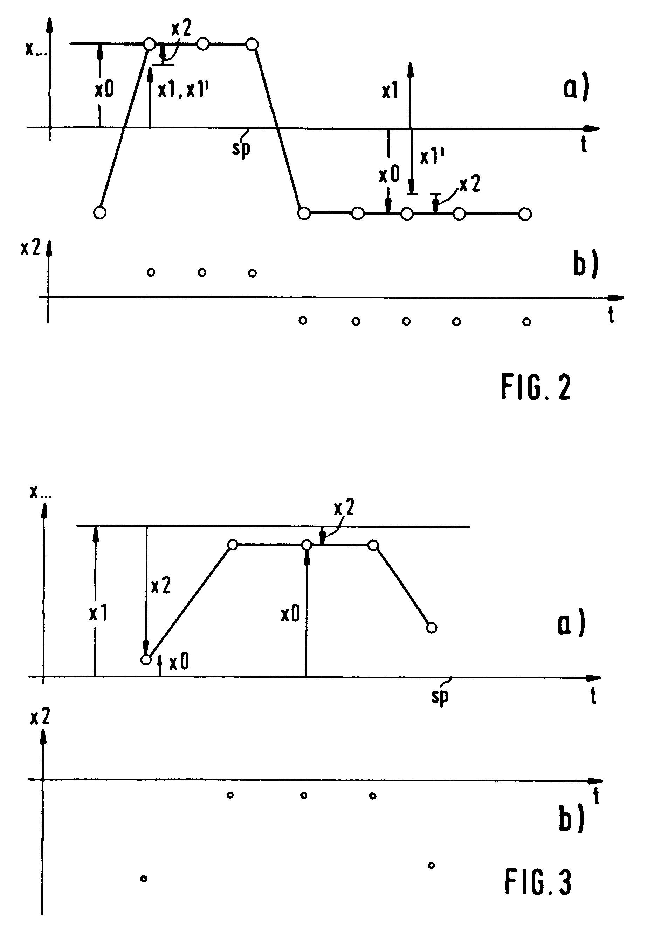

Die Fig. 2 und 3 erläutern die Funktion der Slicerschaltung für den Fall eines idealen Teletextsignals (Fig. 2) und den Fall eines tatsächlichen, bandbegrenzten Teletextsignals (Fig. 3). Dabei bezeichnen die fetten Punkte (Fig. 2a, 3a) jeweils die um den Slicinglevel sp korrigierten Abtastwerte df des Teletextsignals, die mageren Punkte (Fig. 2b, 3b) die diesen Abtastwerten für einen vorgegebenen Inhalt x1 des Akkumulators a1 entsprechenden Ausgangswerte x2 des Subtrahierers s2. Die Pfeile in den Fig. 2a, 3a deuten dabei durch ihre Richtungen an, auf welche Weise der Ausgangswert x2 des Subtrahierers a2 aus den vorzeichenbehafteten Werten x0, x1 und x1 gewonnen wird.

Während im Fall eines idealisierten Teletextsignals (Fig. 2), bei dem nur Abtastwerte +/-x0 auftreten, die Ausgangsgröße x2 des Subtrahierers s2 vergleichsweise klein ist und nur wenig schwankt, kann sie im Fall eines bandbegrenzten Signals (Fig. 3) dann dem Betrag nach große Werte annehmen, wenn bei der Eingangsgröße x0 des zweiten Subtrahierers s2 Abtastwerte in der Nähe von Null auftreten.

Diese Spitzen im Verlauf des Signals x2 in Fig. 3b stellen ein unerwünschtes Störsignal dar und können bei der in den eingangs genannten Druckschriften beschriebenen Anordnung zu dem erwähnten nachteiligen Einrasten führen. Sie werden deshalb durch die obige Logikschaltung gc, deren Funktion im Detail durch die Tabelle spezifiziert ist, geeignet unterdrückt.

Bei der in den eingangs genannten Druckschriften vorbeschriebenen Anordnung würde der Fall der Fig. 3 zu dem erwähnten nachteiligen Einrasten führen.

**Patentansprüche**

1. Digitale Daten-Slicer-Schaltung zur Abtrennung und Wiedergewinnung von digitalen Teletextsignalen aus dem in Farbfernsehempfängern demodulierten und, basierend auf einem Taktsignal (ts), digitalisierten FBAS-Signal, wobei
   - mittels eines aus den Teletextsignalen abgeleiteten Schwellwerts (slicing level) (sp) unter Verwendung eines Fangcode-Detektors und eines Auftastimpulses , dessen aktive Phase mindestens während der Dauer von Horizontal- und Farbsynchronimpulsen auftritt, ein startwert-behaftetes FBAS-Signal (df) erzeugt und dem Minuend-Eingang eines ersten Subtrahierers (s1) zugeführt ist, dessen Ausgang am Minuend-Eingang eines zweiten Subtrahierers (s2) liegt, von dem einerseits der Subtrahend-Eingang mit dem Ausgang eines ersten gewichtenden Akkumulators (a1) und andererseits der Ausgang mit einem Integrierer gekoppelt ist, dessen Ausgang am Subtrahend-Eingang des ersten Subtrahierers (s1) liegt, und
   - die Vorzeichenstelle (vb) des Ausgangssignals des ersten Subtrahierers (s1) zur Unterdrückung von Abtastwerten in der Nähe von Nulldurchgängen des startwert-behafteten FBAS-Signals (df) ausgewertet ist,
   gekennzeichnet durch folgende Merkmale:
   - der Ausgang des zweiten Subtrahierers (s2) liegt über ein Verzögerungsglied (vg), dessen Verzögerungszeit gleich der doppelten Periodendauer des Taktsignals (ts) ist, am ersten Eingang eines ersten Umschalters (u1) und am ersten Eingang eines zweiten Umschalters u2, dessen Ausgang am Eingang eines als Integrierer dienenden zweiten gewichtenden Akkumulators (a2) liegt,
   - der Ausgang des ersten Umschalters (u1) liegt am Eingang eines ersten Vorzeichen-Invertierers (w1), dessen Ausgang mit dem Eingang des ersten Akkumulators (a1) verbunden ist,
   - dessen Ausgang liegt am Eingang eines zweiten Vorzeichen-Invertierers (w2), dessen Ausgang mit dem Subtrahend-Eingang des zweiten Subtrahierers (s2) verbunden ist,
   - dem jeweiligen zweiten Eingang der beiden Umschalter (u1, u2) ist ein der Null entsprechendes Digitalwort ("0") zugeführt,
   - der jeweilige Steuereingang der beiden Umschalter (u1, u2) ist mit dem Ausgang einer Logikschaltung (gc) mit fünf Eingängen (e1...e5) verbunden, zwischen die je ein Verzögerer (v) geschaltet ist, dessen Verzögerungszeit gleich der Periodendauer des Taktsignals (ts) ist,
   - der erste Eingang (e1) der Logikschaltung (gc) und der Steuereingang des zweiten Vorzeichen-Invertierers (w2) sind von der Vorzeichenstelle (vb) des Ausgangssignals des ersten Subtrahierers (s1) angesteuert, während der Steuereingang des ersten Vorzeichen-Invertierers (w1) vom Signal am dritten Eingang (e3) der Logikschaltung (gc) angesteuert ist, wobei das ein negatives Wort angebende Signal der Vorzeichenstelle die beiden Vorzeichen-Invertierer in den invertierenden Zustand bringt, und
   - die Logikschaltung (gc) gibt an ihrem Ausgang, von dem der jeweilige Steuereingang der beiden Umschalter (u1, u2) angesteuert ist, einen den jeweiligen ersten Eingang zum Ausgang durchschaltenden Binärpegel ab, wenn an ihren fünf Eingängen (e1...e5) die Signale der folgenden Tabelle auftreten, wobei mit 0 bzw. 1 die beiden Binärpegel bezeichnet sind und x angibt, daß der eine oder der andere Binärpegel auftreten darf:

| e1 | e2 | e3 | e4 | e5 |
|----|----|----|----|----|
| x | 0 | x | 0 | x |
| x | 1 | x | 1 | x |
| 0 | 1 | 1 | 0 | x |
| 1 | 0 | 0 | 1 | x |
| x | 0 | 1 | 1 | 0 |
| x | 1 | 0 | 0 | 1 |

**2.** Digitale Daten-Slicer-Schaltung nach Anspruch 1, dadurch gekennzeichnet, daß dem Ausgang des zweiten Akkumultors (a2) ein Tiefpaßfilter (tp) nachgeschaltet ist.

**3.** Digitale Daten-Slicer-Schaltung nach Anspruch 1 oder 2, dadurch gekennzeichnet, daß die Gewichtsfaktoren (g1, g2) der Akkumulatoren (a1, a2) voneinander verschieden sind.

**4.** Digitalschaltung nach einem der Ansprüche 1 bis 3, dadurch gekennzeichnet, daß der erste Umschalter (u1) und der zweite Akkumulator (a2) schaltungstechnisch miteinander verschmolzen sind.

**5.** Digitalschaltung nach einem der Ansprüche 1 bis 4, dadurch gekennzeichnet, daß der zweite Umschalter (u2), der erste Akkumulator (a1) und die beiden Vorzeichen-Invertierer (w1, w2) schaltungstechnisch miteinander verschmolzen sind.

**6.** Digitalschaltung nach einem der Ansprüche 1 bis 5, realisiert in der Technik integrierter Isolierschicht-Feldeffekt-mransistorschaltungen, insbesondere in Zweiphasentechnik.

**Claims**

**1.** Digital data slicer circuit for separating and recovering digital teletext signals from the composite color signal demodulated in color-television receivers and digitized with the aid of a clock signal (ts), wherein
- by means of a slicing level (sp) derived from the teletext signals, a start-value-containing composite color signal (df) is produced using a framing-code detector and a gating pulse whose active phase occurs at least during horizontal- and color-synchronizing pulses, and applied to the minuend input of a first subtracter (s1) having its output coupled to the minuend input of a second subtracter (s2) whose subtrahend input is connected to the output of a first weighted accumulator (a1), and whose output is coupled to an integrator having its output coupled to the subtrahend input of the first subtracter (s1), and
- the sign bit (vb) of the output of the first subtracter (s1) is evaluated for suppressing sample values near zero crossings of the start-value-containing composite color signal (df),
  characterized by the following features:
- The output of the second subtracter (s2) is connected via a delay element (vg) providing a delay equal to twice the period of the clock signal (ts) to the first input of a first changeover switch (u1) and to the first input of a second changeover switch (u2) having its output coupled to the input of a second weighted accumulator (a2) serving as the integrator;
- the output of the second changeover switch (u1) is coupled to the input of a first sign inverter (w1) having its output connected to the input of the first accumulator (a1);
- the output of the first accumulator (a1) is coupled to the input of a second sign inverter (w2) having its output connected to the subtrahend input of the second subtracter (s2);
- the second inputs of the two changeover switches (u1, u2) are provided with a digital word corresponding to zero ("0");
- the control inputs of the two changeover switches (u1, u2) are connected to the output of a logic circuit (gc) having five inputs (e1...e5) between each of which is connected a delay element (v) providing a delay equal to the period of the clock signal (ts);
- the first input (e1) of the logic circuit (gc) and the control input of the second sign inverter (w2) are controlled by the sign bit (vb) of the output of the first subtracter (s1), while the control input of the first sign inverter (w1) is controlled by the signal at the third input (e3) of the logic circuit (gc), with the sign-bit signal for a negative word placing the two sign inverters in the inverting state, and

- the logic circuit (gc) provides at its output, which controls the control inputs of the two changeover switches (u1, u2), a binary level causing the respective first input to be connected to the output if the signals of the following table appear at its five inputs (e1...e5), where 0 and 1 are the two binary levels, and x indicates that either of the two binary levels may appear:

| e1 | e2 | e3 | e4 | e5 |
|----|----|----|----|----|
| x | 0 | x | 0 | x |
| x | 1 | x | 1 | x |
| 0 | 1 | 1 | 0 | x |
| 1 | 0 | 0 | 1 | x |
| x | 1 | 1 | 1 | 0 |
| x | 1 | 0 | 0 | 1 |

2. A digital data slicer circuit as claimed in claim 1, characterized in that the output of the second accumulator (a2) is followed by a low-pass filter (tp).

3. A digital data slicer circuit as claimed in claim 1 or 2, characterized in that the weighting factors (g1, g2) of the accumulators (a1, a2) are different from each other.

4. A digital circuit as claimed in any one of claims 1 to 3, characterized in that the first changeover switch (u1) and the second accumulator (a2) are combined to form a subcircuit.

5. A digital circuit as claimed in any one of claims 1 to 4, characterized in that the second changeover switch (u2), the first accumulator (a1), and the two sign inverters (w1, w2) are combined to form a subcircuit.

6. A digital circuit as claimed in any one of claims 1 to 5 and implemented in insulated-gate field-effect transistor integrated circuit technology, preferably with two-phase clocking.

**Revendications**

1. Circuit numérique de découpage de données pour séparer et récupérer des signaux de télétexte à partir du signal complet de télévision démodulé dans des récepteurs de télévision en couleurs et numérisé sur la base d'un signal de cadence (ts), dans lequel
   - un signal complet de télévision (df) affecté d'une valeur de départ est produit au moyen d'une valeur de seuil (slicing level) (sp), dérivée des signaux de télétexte, moyennant l'utilisation d'un détecteur de code d'accrochage et d'une impulsion de suppression, dont la phase active apparait au moins pendant la durée de l'impulsion de synchronisation horizontale et de l'impulsion de synchronisation couleur, et est envoyée à l'entrée du minuende d'un premier soustracteur (s1), dont la sortie est raccordée à l'entrée du minuende d'un second soustracteur (s2), dont d'une part l'entrée du nombre à soustraire est raccordée à la sortie d'un premier accumulateur (a1) réalisant une pondération, et dont d'autre part la sortie est couplée à un intégrateur, dont la sortie est raccordée à l'entrée du nombre à soustraire du premier soustracteur (s1), et
   - la position de signe (vb) du signal de sortie du premier soustracteur (s1) est évaluée pour la soustraction de valeurs d'échantillonnage à proximité d'annulations du signal complet de télévision (df) affecté de la valeur de départ,
   caractérisé par les caractéristiques suivantes :
   - la sortie du second soustrateur (s2) est raccordée par l'intermédiaire d'un circuit de retardement (vg), qui produit un retard égal au double de la durée de la période du signal de cadence (ts), est raccordée à la première entrée d'un premier commutateur (u1) et à la première entrée d'un second commutateur (u2), dont la sortie est raccordée à l'entrée d'un second accumulateur (a2) qui réalise une pondération et est utilisé en tant qu'intégrateur,
   - la sortie du premier commutateur (u1) est raccordée à l'entrée d'un premier inverseur de signe (w1), dont la sortie est raccordée à l'entrée du premier accumulateur (a1),
   - dont la sortie est raccordée à l'entrée d'un second inverseur de signe (w1), dont la sortie est raccordée à l'entrée du nombre à soustraire du second soustracteur (s2),

- un mot numérique ("0"), qui correspond au zéro, est envoyé à la seconde entrée respective des deux commutateurs (u1, u2),
- l'entrée respective de commande des deux commutateurs (u1, u2) est raccordée à la sortie d'un circuit logique (gc) comportant cinq entrées (e1...e5), entre lesquelles est branché respectivement un circuit de retardement (v), qui produit un retard égal à la durée de la période du signal de cadence (ts),
- la première entrée (e1) du circuit logique (gc) et l'entrée de commande du second inverseur de signe (w2) sont commandées par la position de signe (vb) du signal de sortie du premier soustracteur (s1), tandis que l'entrée de commande du premier inverseur de signe (w1) est commandée par le signal présent à la troisième entrée (e3) du circuit logique (gc), le signal, qui indique un mot négatif, de la position de signe amenant les deux inverseurs de signe dans l'état inverseur, et
- le circuit logique (gc) délivre à sa sortie, qui commande l'entrée respective de commande des deux commutateurs (u1, u2), un niveau binaire qui interconnecte directement la première entrée respective à la sortie lorsqu'aux cinq entrées (e1...e5) de ce circuit apparaissent les signaux du tableau suivant, les deux niveaux binaires étant désignés par 0 et 1, et x indiquant que l'un ou l'autre des signaux binaires peut apparaître :

| e1 | e2 | e3 | e4 | e5 |
|----|----|----|----|----|
| x | 0 | x | 0 | x |
| x | 1 | x | 1 | x |
| 0 | 1 | 1 | 0 | x |
| 1 | 0 | 0 | 1 | x |
| x | 0 | 1 | 1 | 0 |
| x | 1 | 0 | 0 | 1 |

2. Circuit numérique de découpage de données selon la revendication 1, caractérisé en ce qu'un filtre passe-bas (tp) est branché en aval du second accumulateur (a2).

3. Circuit numérique de découpage de données selon la revendication 1 ou 2, caractérisé en ce que les facteurs de pondération (g1, g2) des accumulateurs (a1, a2) sont différents.

4. Circuit numérique de découpage de données selon l'une des revendications 1 à 3, caractérisé par le fait que le premier commutateur (u1) et le second accumulateur (a2) sont fusionnés du point de vue de la technique des circuits.

5. Circuit numérique de découpage de données selon l'une des revendications 1 à 4, caractérisé en ce que le second commutateur (u2), le premier accumulateur (a1) et les deux inverseurs de signe (w1, w2) sont fusionnés du point de vue de la technique des circuits.

6. Circuit numérique de découpage de données selon l'une des revendications 1 à 5, réalisé selon la technique des circuits intégrés à transistors à effet de champ à couches isolantes, notamment selon la technique biphase.

FIG. 1

FIG. 2

FIG. 3

9